# EUROPEAN PATENT SPECIFICATION

(11) **EP 3 922 559 B1**
(45) Date of publication and mention of the grant of the patent: **11.09.2024**
(21) Application number: 21179087.8
(22) Date of filing: 11.06.2021
(51) Int. Cl.: B64D 11/06, B60N 2/70, B33Y 80/00

(54) **INTEGRATED SEAT PAN CUSHION STRUCTURE**
INTEGRIERTE SITZSCHALENPOLSTERSTRUKTUR
STRUCTURE INTÉGRÉE DE COUSSIN DE PLATEAU DE SIÈGE

(30) Priority: 13.06.2020 IN 202041024886; 14.05.2021 US 202117320499
(43) Date of publication of application: 15.12.2021
(73) Proprietor: B/E Aerospace, Inc., Winston-Salem, NC 27105 (US)
(72) Inventor: RAO, Sreekanth Koti Ananda, Chikkalasandra, 560061 Bangalore (IN); VIJAYAN, Rithukiran, Vidyaranyapura Post., 560097 Bangalore (IN); GUPTA, Nakul, Dwarka, 110075 New Delhi (IN)
(74) Representative: Dehns

(56) References cited:
- WO-A1-2020/204889
- WO-A2-2015/191709
- US-A- 6 142 563
- US-A1- 2019 298 072
- US-B1- 6 896 324
- "Light Metal Alloys Applications", 11 June 2014, INTECH, ISBN: 978-953-51-1588-5, article DIEGO MANFREDI ET AL: "Additive Manufacturing of Al Alloys and Aluminium Matrix Composites (AMCs)", XP055410804, DOI: 10.5772/58534

## Description

### BACKGROUND

Cabin attendant seat pan assemblies are generally made of multiple layers: a cushion composed of multiple layers of foam, a plastic seat-pan insert, and seat-pan cover attached to a seat pan base. Materials and manufacturing are expensive. Non-metallic parts including the foam and fabric covers are subjected to flammability and toxicity requirements. Furthermore, the foam cushion, including the plastic seat pan insert, has negligible impact absorption. US 6896324 B1 discloses an aircraft seat. WO 2015/191709 A2 and US 2019/298072 A1 each disclose known designs of seat.

### SUMMARY

According to a first aspect, there is provided an aircraft seat according to claim 1.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
- FIG. 1: shows a perspective, exploded view of an aircraft cabin attendant seat;
- FIG. 2: shows a perspective view of an integrated seat pan according to an exemplary embodiment;
- FIG. 3: shows a front, cross-sectional view of an integrated seat pan according to an exemplary embodiment;
- FIG. 4A: shows a perspective view of an integrated seat pan according to an exemplary embodiment;
- FIG. 4B: shows a front, cross-sectional view of an integrated seat pan according to an exemplary embodiment; and
- FIG. 4C: shows a top, cross-sectional view of an integrated seat pan according to an exemplary embodiment.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a completely Integrated seat pan with a negative stiffness. The Integrated seat pan has an intrinsic metallic lattice structure, and a smooth outer surface which provides a comfortable seating area to the occupant. The Integrated seat pan with intrinsic metallic lattice elastically deforms to absorb the weight of the crewmember and provide cushioning.

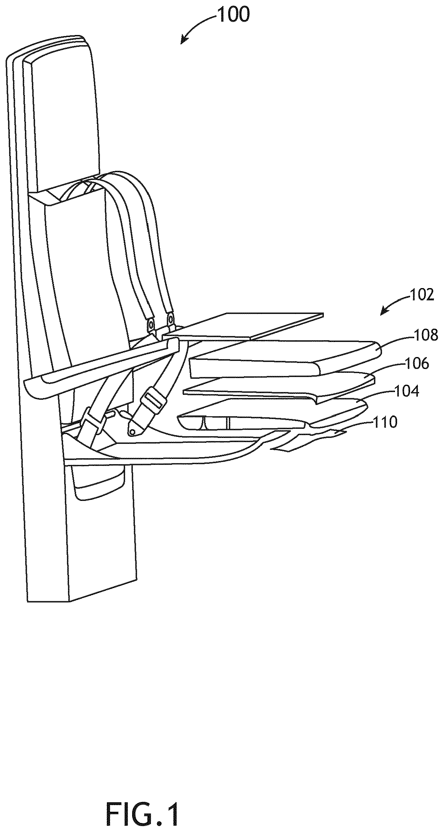

Referring to FIG. 1, a perspective, exploded view of an aircraft cabin attendant seat 100 is shown. State of the art seat pans 102 comprise a plastic seat pan insert 104, one or more foam layers 106, and a seat pan cover 108. The assembly may be affixed to the aircraft cabin attendant seat 100 via seat pan tape 110.

Non-metallic portions of the seat pan 102, 106, 108, 110 require flammability and toxicity testing which may be expensive, especially whenever new materials are employed. Furthermore, assembly requires some amount of labor.

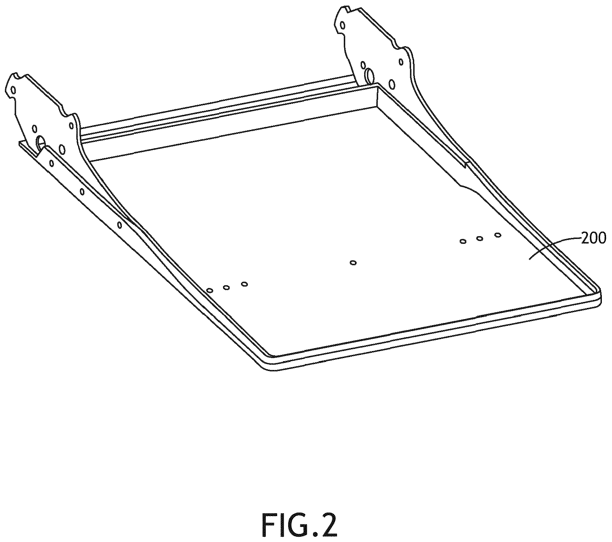

Referring to FIG. 2, a perspective view of an integrated seat pan 200 according to an exemplary embodiment is shown. The integrated seat pan 200 is a singular metal component. A singular metal component does not require the same testing and certification as a composite seat pan with non-metallic components.

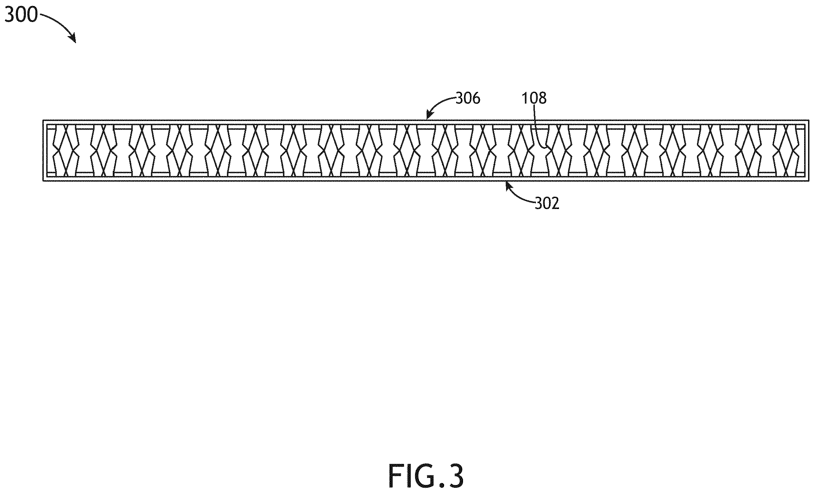

Referring to FIG. 3, a front, cross-sectional view of an integrated seat pan 300 according to an exemplary embodiment is shown. The integrated seat pan 300 comprises a solid seat pan base 302 portion, an intrinsic metallic lattice 304 portion disposed on the solid seat pan base 302 portion, and smooth outer surface integrated with the intrinsic metallic lattice 304 portion and seat pan base 302 portion to act as a solid seat cover 306 portion. In at least one embodiment, the seat cover 306 portion completely surrounds the intrinsic metallic lattice 304 portion.

In at least one embodiment, the integrated seat pan 300 is produced via an additive manufacturing process. The seat pan base 302 portion, metallic lattice 304 portion, and seat cover 306 portion may be one singular metallic component.

The integrated seat pan 300 defines a negative stiffness. The cross-sectional thickness of the seat cover 306 portion, and the structure and disposition of the metallic lattice 304 portion define elastically deformable portions of the integrated seat pan 300 to provide some amount of cushioning and energy absorption.

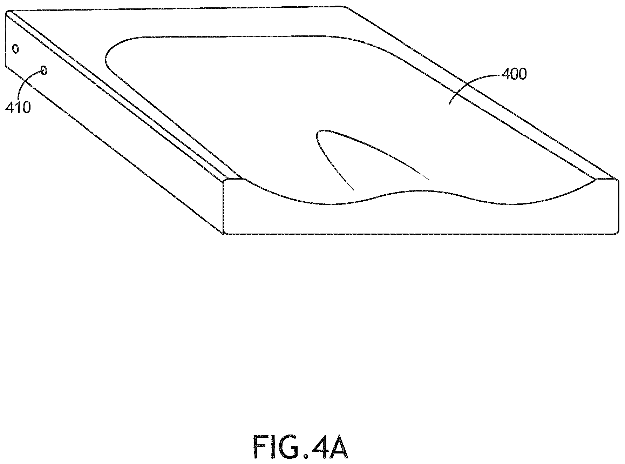

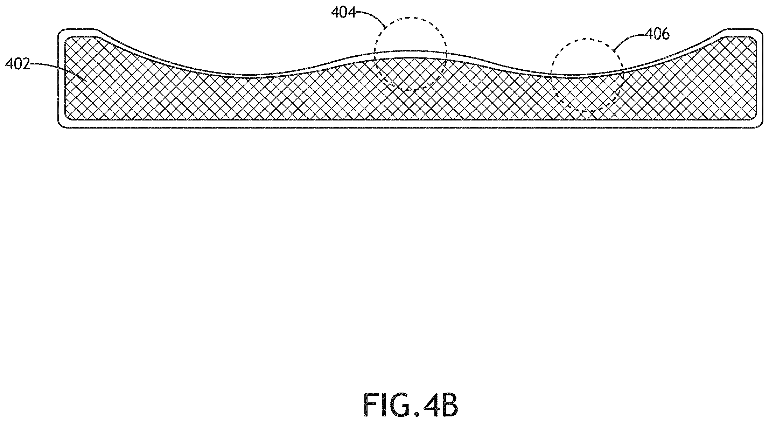

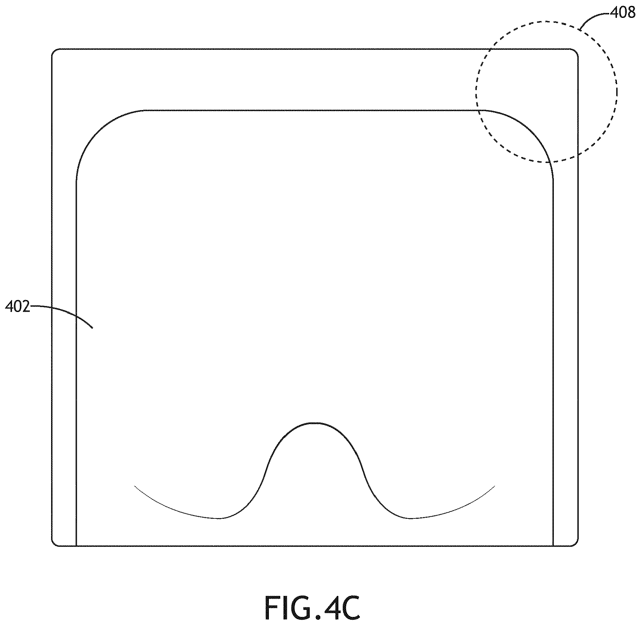

Referring to FIGS. 4A-4C, a perspective view; a front, cross-sectional view; and a top, cross-sectional view of an integrated seat pan according to an exemplary embodiment are shown. The integrated seat pan defines a contoured portion in a seat cover. The contoured portion 400 corresponds to regions of variable cross-sectional thickness 404, 406 in the solid surface of the seat cover. Variable cross-sectional thicknesses 404, 406 alter the relative degree of deformability in portions of the integrated seat pan requiring more or less cushioning.

The contoured portion 400 may alter the disposition of the interior metallic lattice 402. Furthermore, the metallic lattice 402 defines internal regions of differing lattice structure to produce more or less cushioning via different local negative stiffness.

In at least one embodiment, the integrated seat pan may define one or more solid regions 408. The integrated seat pan may need to be affixed to a corresponding aircraft cabin attendant seat. Such fixation may be by attaching the integrated seat pan to a preexisting plate, but may also be by fixation elements such as screws. The integrated seat pan may therefore define connecting elements 410 in the one or more solid regions 408 where the integrated seat pan can be secured to the aircraft cabin attendant seat.

It may be appreciated that a negative stiffness metallic lattice 402 may be more energy absorbent in an impact that traditional foam cushions. An integrated seat pan has the cushioning effect inbuilt via the negative stiffness of the lattice structure 402.

In at least one embodiment, the integrated seat pan is produced via an additive manufacturing process. The integrated seat pan may comprise AISi10Mg; furthermore, the integrated seat pan may be heat treated according to a T6 process.

It may be appreciated that while components of the seat pan have been discussed in isolation, it is envisioned that the seat pan would be manufactured as a singular element with all of the components integrated. Manufacturing an integrated seat pan according to the present disclosure may cost half as much as a traditional seat pan cushion. Furthermore, an integrated metal seat pan does not require flammability or toxicity testing and certification. Finally, an integrate seat pan is simpler to assemble and mount directly on the seat.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the scope of the following claims.

## Claims

1. An aircraft seat comprising:
a seat pan base (302);
a metallic lattice (304) disposed on the seat pan base (302); and
a seat cover (306) disposed on the metallic lattice (304);
wherein the seat cover (306) defines one or more contoured portions, and the contoured portions define variable cross-sectional thicknesses disposed in regions to provide more or less cushioning,
**characterized in that** the metallic lattice (304) defines internal regions of differing lattice structure resulting in different local negative stiffness.

2. The aircraft seat of Claim 1, wherein the metallic lattice (304) comprises an AISiMg alloy.

3. The aircraft seat of Claim 2, wherein the metallic lattice (304) is T6 heat treated.

## Patentansprüche

1. Luftfahrzeugsitz, umfassend:
eine Sitzschalenbasis (302);
ein Metallgitter (304), das auf der Sitzschalenbasis (302) angeordnet ist; und
einen Sitzbezug (306), die auf dem Metallgitter (304) angeordnet ist;
wobei der Sitzbezug (306) einen oder mehrere konturierte Abschnitte definiert und die konturierten Abschnitte variable Querschnittsdicken definieren, die in Bereichen angeordnet sind, um mehr oder weniger Polsterung bereitzustellen,
**dadurch gekennzeichnet, dass**
das Metallgitter (304) interne Bereiche von unterschiedlicher Gitterstruktur definiert, was zu unterschiedlichen lokalen negativen Steifigkeiten führt.

2. Luftfahrzeugsitz nach Anspruch 1, wobei das Metallgitter (304) eine AISiMg-Legierung umfasst.

3. Luftfahrzeugsitz nach Anspruch 2, wobei das Metallgitter (304) T6-wärmebehandelt ist.

## Revendications

1. Siège d'aéronef comprenant :
une base de plateau de siège (302) ;
un treillis métallique (304) disposé sur la base de plateau de siège (302) ; et
une housse de siège (306) disposée sur le treillis métallique (304) ;
dans lequel la housse de siège (306) définit une ou plusieurs parties profilées, et les parties profilées définissent des épaisseurs de section transversale variables disposées dans des zones pour fournir plus ou moins de rembourrage,
**caractérisé en ce que**
le treillis métallique (304) définit des zones internes de structure de treillis différente, ce qui entraîne une rigidité négative locale différente.

2. Siège d'aéronef selon la revendication 1, dans lequel le treillis métallique (304) comprend un alliage AISiMg.

3. Siège d'aéronef selon la revendication 2, dans lequel le treillis métallique (304) est traité thermiquement T6.
